# EUROPÄISCHE PATENTSCHRIFT

(11) **EP 2 923 578 B1**
(45) Veröffentlichungstag und Bekanntmachung des Hinweises auf die Patenterteilung: **20.11.2019**
(21) Anmeldenummer: 15153701.6
(22) Anmeldetag: 03.02.2015
(51) Int. Cl.: A21C 13/00, A21B 3/13, A21D 13/00

(54) **Verfahren zur Herstellung eines Snack-Produkts**
Method for manufacturing a snack product
Procédé de fabrication d'un sandwich

(30) Priorität: 10.02.2014 DE 202014001081 U
(43) Veröffentlichungstag der Anmeldung: 30.09.2015
(73) Patentinhaber: Herbert Ospelt Anstalt, 9487 Bendern (LI)
(72) Erfinder: Ospelt, Alexander, 9490 Vaduz (LI)
(74) Vertreter: Bogensberger, Burkhard

(56) Entgegenhaltungen:
- WO-A2-98/04138
- AU-A4- 2010 100 914
- CA-A- 600 072
- DE-A1- 2 400 129
- US-A- 3 551 161
- US-A- 4 190 229
- US-A- 5 232 609
- US-A1- 2006 165 849

## Beschreibung

### TECHNISCHES GEBIET

Die vorliegende Erfindung betrifft den Bereich der Herstellung von Backwaren mit Belag oder Füllung, welche in erster Linie als Snack-Produkte oder Zwischendurch-Mahlzeiten gedacht sind.

### STAND DER TECHNIK

Belegte Brötchen, Sandwiches, Hot-Dogs und ähnliche Produkte sind als Zwischendurch-Mahlzeiten oder Snacks sehr beliebt und werden daher in gewöhnlichen Lebensmittelläden, vor allem aber auch in Tankstellenshops, Schnellimbissbuden, an Bahnhöfen, Flughäfen, Autobahnraststätten und dergleichen in verpackter oder unverpackter Form angeboten.

EP 2676546A1 offenbart die industrielle Herstellung einer Backware in Form eines vorgebackenen oder fertig gebackenen, wannenförmigen Brötchens aus einem Gärteig, welches ein U-förmiges Querschnittsprofil aufweist und welches nachträglich mit einem gewünschten, insbesondere cremigen, Füllgut belegt werden kann.

WO9804138 A2, US4190229 A und US3551161 A offenbaren verschiedene Verfahren zur Herstellung von Backwaren mit Füllung.

### KURZE BESCHREIBUNG DER ERFINDUNG

Es ist nun die Aufgabe der vorliegenden Erfindung, eine ökonomisch attraktive und prozesstechnisch vereinfachte Alternative zum Herstellungsprozess eines Snack-Produktes in Form eines belegten vorgebackenen oder fertig gebackenen Brötchens bereit zu stellen. Diese Aufgabe wird durch den unabhängigen Schutzanspruch gelöst. Sinnvolle Ausgestaltungen des Herstellverfahrens werden in den abhängigen Ansprüchen dargestellt.

Die Erfindung löst dieses Problem durch ein Verfahren nach Anspruch 1. Weitere erfindugsgemässen Ausführungsformen sind in den abhängigen Ansprüchen beschrieben.

### KURZE BESCHREIBUNG DER ABBILDUNGEN

- Fig. 1A: zeigt eine schematische Frontalansicht einer geöffneten, länglichen Backform mit oberer und unterer Backschalenhälfte;
- Fig. 1B: zeigt eine schematische Seitenansicht der geöffneten, länglichen Backform aus Fig.1A, mit oberer und unterer Backschalenhälfte;
- Fig. 2A: zeigt die Backform aus Fig. 1A in geschlossenem Zustand;
- Fig. 2B: zeigt die Backform aus Fig. 1B in geschlossenem Zustand;
- Fig. 3: zeigt eine Skizze eines Snack-Produktes in Aufsicht von schräg oben;
- Fig. 4A: zeigt eine Skizze eines anderen Snack-Produktes in Aufsicht von schräg oben;
- Fig. 4B: zeigt eine Querschnittsansicht des Snack-Produktes von Fig. 4A;
- Fig. 5A: zeigt eine Skizze eines Snack-Produktes mit Topping in Aufsicht von schräg oben;
- Fig. 5B: zeigt eine Querschnittsansicht des Snack-Produktes von Fig. 5A;

### DETAILLIERTE BESCHREIBUNG DER ERFINDUNG

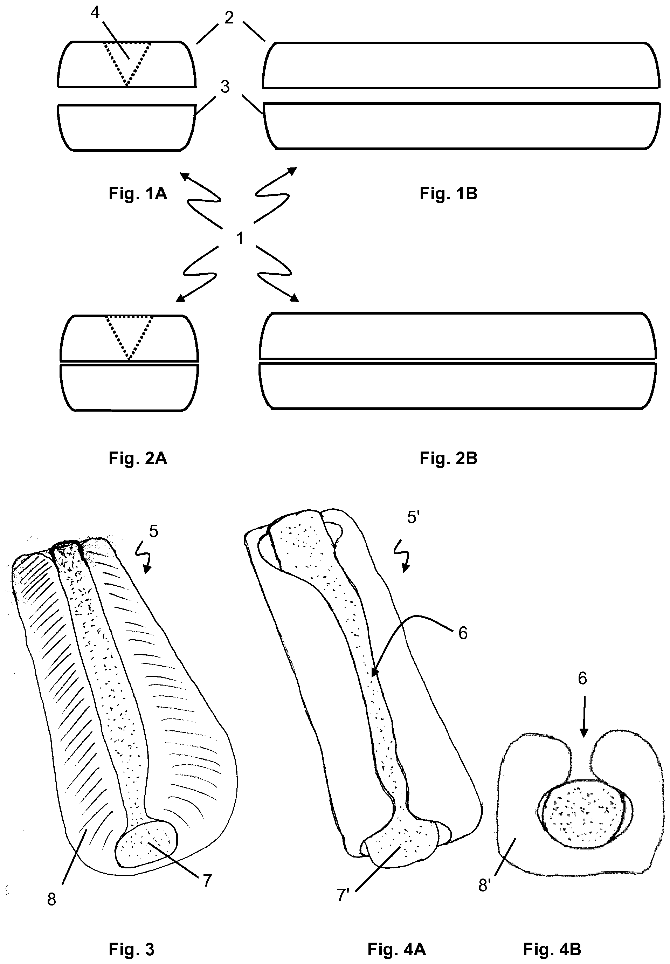

Zur Herstellung eines Snack-Produkts kann eine Backform eingesetzt werden, wie sie in den Abbildungen 1A, 1B, 2A und 2B schematisch dargestellt ist.

Die Backform 1 ist typischerweise zweiteilig und besteht aus einer oberen Backschalenhälfte 2 und einer unteren Backschalenhälfte 3, wobei nach Einbringung eines Teigrohlings in die untere Backschalenhälfte 3 die obere Backschalenhälfte wie ein Deckel auf der unteren platziert und die Backform 1 dadurch geschlossen wird. Bei dem Teigrohling handelt es sich um einen gärfähigen Teig, der mit Hefe oder anderen geeigneten Backtriebmitteln versetzt ist.

Der Teigrohling wird noch vor dem Gärprozess mit einem Füllgut 7 belegt, typischerweise mit festem Füllgut, und in der geschlossenen Backform (Fig. 2A und 2B) einem Gärprozess unterzogen. Um zu verhindern, dass der gärende Teig das Füllgut 7, 7' über ein erwünschtes Mass hinaus anhebt, ist die obere Backschalenhälfte an ihrer Innenseite mit einer stempelartigen Begrenzungsvorrichtung 4 ausgestattet, die eine Bewegung des Füllguts in Richtung des aufsteigenden, gärenden Teigs begrenzt. Die Begrenzungsvorrichtung 4 kann ein längliches Profil sein, welches an der Innenseite der oberen Backschalenhälfte nach vor ragt, es kann aber auch die obere Backschalenhälfte selbst in der gewünschten Profilform ausgebildet sein.

Das längliche Profil der Begrenzungsvorrichtung kann beispielsweise einen keilförmigen, dreieckförmigen, trapezartigen, halbkreisförmig konvexen, oder rechteckigen Querschnitt aufweisen und ragt typischerweise nicht über den Rand der oberen Backschalenhälfte hinaus. Sie dient in erster Linie dem Zweck, das feste Füllgut innerhalb der Backform 4 in einer - in Bezug auf eine horizontal ausgerichtete Backform - vertikalen Position festzuhalten, während der gärende Teig durch seine Volumensvergrösserung rund um das Profil herum emporsteigt.

Die Begrenzungsvorrichtung kann so dimensioniert sein, dass sie - vor Beginn däs Gärprozesses - bei geschlossener Backform die Oberseite des festen Füllgutes nicht oder nur leicht berührt. Sie kann aber auch so dimensioniert sein, dass sie bei geschlossener Backform - vor Beginn däs Gärprozesses - das Füllgut leicht, also ca. 0.5 bis 5 mm tief, in den Teigrohling hinein presst, um beispielsweise eine zumindest teilweise stoffschlüssige Verbindung zwischen Teig und Füllgut zu erreichen.

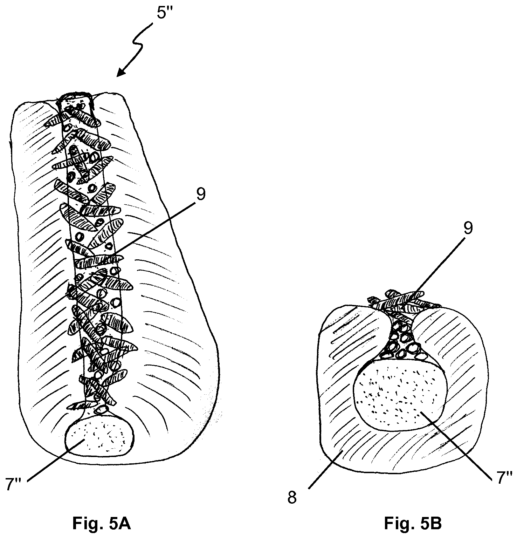

In zweiter Linie dient die Begrenzungsvorrichtung, zusammen mit der Geometrie der übrigen Teile der Backform, der finalen Formgebung des vorgebackenen oder fertig gebackenen Snack-Produkts 5, 5', 5". Insbesondere verhindert sie ein Zusammenwachsen des Teiges an seiner Oberseite während des Gärprozesses, wodurch eine mehr oder weniger regelmässig geformte Längsrinne 6 ausgebildet wird, die bei Bedarf zu einem späteren Zeitpunkt noch zusätzlich mit einer Garnitur 9 aus weiteren Zutaten versehen werden kann (siehe Abbildungen 4A, 4B, 5A und 5B).

Zur Erhöhung der Produktionskapazität im industriellen Fertigungsverfahren können mehrere Backschalenhälften in einem Verbund zusammengefasst sein, so dass sich Backbleche mit einer Vielzahl an oberen Backschalenhälften und Backbleche mit einer korrespondieren Anzahl an unteren Backschalenhälften ergeben. Die Backbleche mit den unteren Backschalenhälften werden typischerweise maschinell mit Teigrohlingen belegt und mit dem gewünschten Füllgut 7,7' versehen, worauf sie mit den die oberen Backschalenhälften enthaltenden Backblechen abgedeckt und verschlossen werden.

Die Dimensionierung und Gestaltung der Backformen ist in weiten Bereichen variabel, wobei die Backformen häufig so dimensioniert sind, dass ihre Innenmasse eine Länge von 15 bis 25 cm, eine Breite von 5 bis 10 cm und eine Höhe von 2 bis 5 cm aufweisen.

Herstellungsverfahren:
Ein vorgefertigter, gärfähiger Teig wird portioniert und im ungegärten Zustand in eine untere Backschalenhälfte 3 gelegt. Auf diesen rohen, ungegärten Teig wird das Füllgut 7,7' typischerweise zentriert in Längsrichtung aufgebracht. Als Füllgut eignen sich vor allem Zutaten, die bei einer Temperatur von bis zu 45 Grad Celsius fest sind wie z.B. Würstchen, Fleischkäse, Hart- und Weichkäse, Schafkäse, Gemüsestücke, Meeresfrüchte, und dergleichen. Es kann stattdessen aber auch Material, welches bei Raumtemperatur weich, cremig, pastös oder krümelig ist, wie z.B. Frischkäse, Leberpastete, Brotaufstriche und Ähnliches, nach diesem Verfahren als Füllgut eingesetzt werden, allerdings im gefrorenen Zustand. Ebenso ist es möglich, feste Schokoladestücke oder süsse Cremefüllungen in gefrorenem Zustand wie z.B. Nougatfüllungen, Schokocremefüllungen, Nussfüllungen, Mohnfüllungen und dergleichen als Füllgut zu verwenden, um anstatt "salziger", d.h. fleisch-, fisch- oder käsehaltiger, eben süsse Snack-Produkte nach dem erfindungsgemässen Verfahren herzustellen.

Nach der Aufbringung des festen Füllgutes 7, 7' auf den Teigrohling in der unteren Backschalenhälfte 3 wird die Backform geschlossen, wobei die obere Backschalenhälfte 2 mit integrierter Begrenzungsvorrichtung 4 auf der unteren Backschalenhälfte so platziert wird, dass die Begrenzungsvorrichtung zum Teigrohling hin weist. Obere und untere Backschalenhälfte können aber auch so ausgeführt sein, dass sie an einer Längsseite mit einem Scharnier miteinander verbunden sind und durch einfaches Auf- und Zuklappen geöffnet bzw. geschlossen werden.

Nach dem Verschliessen wird die gefüllte Backform dem Gärprozess zugeführt, welcher unter vorbestimmter, zeitlich definierter und kontrollierter Temperatur- und Luftfeuchteführung erfolgt. Dabei wird die Bläschenbildung durch die im Teig vorhandene Hefe oder die im Teig enthaltenen Backtriebmittel angeregt und eine Volumensvergrösserung ("Aufgehen") des Teiges bewirkt. Typischerweise erfolgt die Teiggärung bei einer Temperatur im Bereich von etwa 35 bis 40 Grad C über einen Zeitraum von meist ca. 15 bis 45 Minuten. Je nach Füllgut kann es dabei auch zu stoffschlüssigen Verbindungen zwischen Teig und Füllgut kommen. Bedingt durch die Begrenzungsvorrichtung 4, welche das eingebrachte Füllgut 7, 7' im Wesentlichen an seinem ursprünglichen oder nahe seinem ursprünglichen Platz hält, dehnt sich der expandierende Teig rund um das Füllgut herum nach oben hin aus und ummantelt dabei das Füllgut, ausgenommen jenen Bereich, der von der Begrenzungsvorrichtung eingenommen bzw. ausgefüllt wird.

Nach dem abgeschlossenen Gärprozess wird die noch immer verschlossene Backform aus der Gärkammer entnommen und dem Backprozess zugeführt. Hier erfolgt nun die abschließende Ausformung des befüllten und expandierten Teigrohlings. Je nach vorgesehenem Anwendungszweck wird der befüllte Teigrohling nur bis zu einer gewünschten, vorbestimmten Konsistenz vorgebacken oder bereits essfertig zu Ende gebacken. Die durch den Backprozess verursachte Umwandlung und Härtung des Teiges zur vor- oder endgebackenen Backware erzeugt auch die charakteristische, durchgehende offene Längsrinne oberhalb des zuvor eingebrachten Füllgutes. In einer typischen Ausführungsform der Erfindung wird das Füllgut so weit vom Teigmantel 8, 8' umhüllt oder anderweitig, beispielsweise durch Stoffschluss, vom Teigmantel festgehalten, dass es selbst bei einer Drehung des Snack-Produkts um seine Längsachse nicht mehr aus dem Teigmantel 8, 8' herausfallen kann. Nach dem Backprozess wird die Backform aus dem Backofen herausgeholt, geöffnet und die darin enthaltene Backware zur Abkühlung und anschliessenden Verpackung oder allfälligen Weiterverarbeitung entnommen.

Im Falle einer Weiterverarbeitung kann die der Backform entnommene und abgekühlte Backware einem Belegebereich zugeführt werden, wo sie mit verschiedenen Garnituren 9, auch Toppings genannt, belegt bzw. garniert werden kann. Die Toppings 9 können als Granulate, Trocken- oder Kühlware, in geraspelter Form, geschnitten oder auch als Pasten oder Flüssigkeiten einzeln oder in Kombination auf die halbfertige oder fertiggebackene Backware aufgetragen werden. Im Rahmen der vorliegenden Erfindung sollen unter dem Begriff "Topping" auch dekorative Garnituren für süsse Varianten des Snack-Produktes, wie z.B. Schokosträusel, Kokosraspel, Mandelsplitter und dergleichen verstanden werden. Typischerweise erfolgt das Auftragen der Toppings in den Bereich der Längsrinne der Backware. Bei der industriellen Fertigung kommen für diesen Zweck typischerweise verschiedene Belegeautomaten und Dosiervorrichtungen zum Einsatz, mit deren Hilfe sich eine Vielzahl unterschiedlicher Garnituren und Beläge realisieren lassen.

Nach der Belegung ist die Backware bezüglich ihrer Komponentenzusammensetzung fertig gestellt und damit zum halbfertigen oder fertigen Snack-Produkt mutiert. Im industriellen Fertigungsprozess wird zumindest das halbfertige Snack-Produkt daraufhin im Regelfall auf eine Kerntemperatur von ca. -18 °C tiefgefroren und mit einer lebensmittelkonformen Primärverpackung versehen.

Das halbfertige Snack-Produkt wird vom Endverbraucher typischerweise in tiefgekühltem Zustand erworben, es kann aber auch in einer gasdichten Kunststoffverpackung mit oder ohne Inertgasfüllung zur Lagerung bei Raum- oder Kühltemperatur in den Handel kommen. Es ist dazu bestimmt, vor dem Verzehr erhitzt zu werden. Das fertiggebackene Snack-Produkt kann hingegen gekühlt oder unmittelbar verzehrbereit in entsprechenden Verpackungen an den Handel ausgeliefert werden. Je nach Art des Füllgutes und/oder des Toppings kann jedoch auch beim bereits verzehrfertig angebotenen Snack-produkt ein kurzzeitiges Erhitzen vor dem Genuss vorteilhaft sein.

**BEZUGSZEICHENLISTE**

| | |
|---|---|
| 1 | Backform |
| 2 | obere Backschalenhälfte |
| 3 | untere Backschalenhälfte |
| 4 | Begrenzungsvorrichtung |
| 5,5',5" | Snack-Produkt |
| 6 | Längsrinne im Snackprodukt |
| 7,7', 7" | Füllgut |
| 8, 8' | Teigmantel |
| 9 | Garnitur, Topping |

## Patentansprüche

1. Verfahren zur Herstellung eines Snack-Produktes (5, 5', 5"), umfassend die folgenden Schritte:
a) ein gärfähiger Teigrohling wird in einer unteren Backschalenhälfte einer Backform (1) platziert und mit einem festen Füllgut (7,7', 7") belegt;
b) die Backform (1) wird mittels einer oberen Backschalenhälfte verschlossen, anschliessend einer Gärvorrichtung zugeführt und eine Teiggärung vorgenommen, wobei durch eine in der oberen Backschalenhälfte angeordnete, in Richtung zum Füllgut vorspringende Begrenzungsvorrichtung (4) das Füllgut im wesentlichen ortsstabil an seinem ursprünglichen Platz gehalten wird, während der Teig in der Backform expandiert und das Füllgut teilweise ummantelt;
c) nach abgeschlossenem Gärvorgang wird die Backform (1) einer Backvorrichtung zugeführt und der expandierte Teig bis zur Erlangung einer vorbestimmten Konsistenz vorgebacken oder bis zur Genussreife fertig gebacken und gegebenenfalls weiter verarbeitet,
wobei ein Snack-Produkt entsteht, in welchem das Füllgut in einem Teigmantel (8,8') eingebettet und zumindest teilweise mit diesem form- und/oder stoffschlüssig verbunden ist, und wobei das Snack-Produkt an seiner Oberseite eine durch die Begrenzungsvorrichtung (4) verursachte, durchgehende offene Rinne (6) aufweist, welche sich über die gesamte Länge des Snack-Produktes erstreckt.

2. Verfahren nach Anspruch 1, **dadurch gekennzeichnet, dass** das feste Füllgut in Absatz a) bei Raumtemperatur weich, cremig, pastös oder krümelig ist und für den Zweck in Absatz a) in gefrorenem, gegebenenfalls tiefgefrorenem, Zustand eingesetzt wird.

3. Verfahren nach Anspruch 1 oder 2, **dadurch gekennzeichnet, dass** das Füllgut salziger Natur ist und fleisch-, fisch- oder käsehaltiges Material in fester, cremiger, pastöser oder krümeliger Form aufweist, und insbesondere aus der Gruppe Würstchen, Fleischkäse, Hartkäse, Weichkäse, Schafkäse, Frischkäse, Fischprodukte, Shrimps, Pasten, Pasteten, Brotaufstriche ausgewählt wird.

4. Verfahren nach nach Anspruch 1 oder 2, **dadurch gekennzeichnet, dass** das Füllgut vegetarischer Natur ist und Gemüsestücke enthält.

5. Verfahren nach nach Anspruch 1 oder 2, **dadurch gekennzeichnet, dass** das Füllgut süsser Natur ist und vorzugsweise aus der Gruppe Schokoladestückchen, süsse Cremefüllung, Nougatfüllung, Schokocremefüllung, Nussfüllung, Mohnfüllung ausgewählt wird.

6. Verfahren nach einem der Ansprüche 1 bis 5, **dadurch gekennzeichnet, dass** die offene Rinne (6) so schmal ausgebildet oder die Füllung durch Form- und/oder Stoffschluss so stark mit dem Teigmantel (8,8') verbunden ist, dass die Füllung auch bei einer Drehung des Snack-Produktes um seine Längsachse nicht aus dem Teigmantel heraus fallen kann.

7. Verfahren nach einem der Ansprüche 1 bis 6, **dadurch gekennzeichnet, dass** der Teigmantel aus einem Hefeteig hergestellt wird.

8. Verfahren nach einem der Ansprüche 1 bis 7, **dadurch gekennzeichnet, dass** ein Snackprodukt mit einer Länge von 15 bis 25 cm, einer Breite von 5 bis 10 cm und einer Höhe von 2 bis 5 cm hergestellt wird.

9. Verfahren nach einem der Ansprüche 1 bis 8, **dadurch gekennzeichnet, dass** das Snack-Produkt nach erfolgtem Backvorgang im Bereich seiner Längsrinne (6) mit einer Garnitur oder einem Topping (9) versehen wird.

## Claims

1. A method for producing a snack product (5, 5', 5"), comprising the following steps:
a. An unformed fermentable dough product is placed in a lower baking tray half of a baking pan (1), and a solid filling material (7, 7', 7") is placed thereon;
b. the baking pan (1) is closed by means of an upper baking tray half, then sent to a fermentation device, where the dough is fermented, wherein the filling material is held essentially in a stable position in its original place by means of a limiting device (4) that is provided in the upper baking tray half and protrudes in the direction of the filling material, while the dough expands in the baking pan thereby partially wrapping the filling material;
c. after the fermentation process is concluded, the baking pan (1) is sent to a baking apparatus, and the expanded dough is prebaked until reaching a predetermined consistency or is baked until done and ready for consumption and is optionally processed further,
wherein the result is a snack product, in which the filling material is embedded in a dough wrapping (8, 8'), which filling is connected at least partially to the dough wrapping in a form-fit manner and/or by material connection, and wherein the snack product at its upper side comprises a continuous open channel (6) formed by the limiting device (4), which channel extends over the entire length of the snack product.

2. The method according to claim 1, **characterized in that** the solid filling material in paragraph a) is in a soft, creamy, pasty or crumbly condition at room temperature and is used in a frozen condition, optionally in a deep-frozen condition, for the purpose specified in paragraph a).

3. The method according to claim 1 or 2, **characterized in that** the filling material is a salty material containing meat, fish or cheese in a solid, creamy, pasty or crumbly form, and is selected in particular from the group consisting of sausage, meatloaf, hard cheese, soft cheese, sheep cheese, fresh cheese, fish products, shrimp, pastes, pates and spreads.

4. The method according to claim 1 or 2, **characterized in that** the filling material is of a vegetarian type and contains pieces of vegetables.

5. The method according to claim 1 or 2, **characterized in that** the filling material is of a sweet type and is preferably selected from the group consisting of pieces of chocolate, sweet cream filling, nougat filling, chocolate cream filling, nut filling and poppy seed filling.

6. The method according to any one of claims 1 through 5, **characterized in that** the open channel (6) is so narrow or the filling is attached to the dough wrapping (8, 8') so strongly by form-fitting and/or by material connection that the filling cannot fall out of the dough wrapping even when the snack product is rotated about its longitudinal axis.

7. The method according to any one of claims 1 through 6, **characterized in that** the dough wrapping is produced from a yeast dough.

8. The method according to any one of claims 1 through 7, **characterized in that** a snack product with a length of 15 to 25 cm, a width of 5 to 10 cm and a height of 2 to 5 cm is produced.

9. The method according to any one of claims 1 through 8, **characterized in that** the snack product is provided with a garnish or a topping (9) in the area of its longitudinal channel (6) after the baking process is completed.

## Revendications

1. Procédé de fabrication d'un produit de collation (5, 5', 5"), le procédé comprenant les étapes suivantes :
a. une pâte brute fermentescible est placée dans une moitié de coque de cuisson inférieure d'un moule de cuisson (1) et est recouverte d'une garniture solide (7, 7', 7") ;
b. le moule de cuisson (1) est fermé par une moitié de coque de cuisson supérieure, puis amené à un dispositif de fermentation et la pâte est laissée à fermenter, la garniture étant maintenue à sa place d'origine de manière sensiblement stable par un dispositif de limitation se projetant en direction de la garniture (4) et disposé dans la moitié de coque de cuisson supérieure tandis que la pâte s'expanse dans le moule de cuisson et enveloppe partiellement la garniture ;
c. une fois le processus de fermentation terminé, le moule de cuisson (1) est amené à un dispositif de cuisson et la pâte expansée est précuite au four jusqu'à obtenir une consistance prédéterminée ou est cuite jusqu'à être prête à la consommation et est éventuellement soumise à un traitement ultérieur,
un produit de collation étant obtenu dans lequel la garniture est incorporée dans une enveloppe de pâte (8, 8') et est liée au moins partiellement à celle-ci par complémentarité de formes ou par une liaison de matière, et le produit de collation comportant sur son côté supérieur un canal ouvert (6) généré par le dispositif de limitation (4) et s'étendant de bout en bout sur toute la longueur du produit de collation.

2. Procédé selon la revendication 1, **caractérisé en ce que** la garniture solide du paragraphe a) est molle, crémeuse, pâteuse ou friable à la température ambiante et est utilisée à l'état congelé, éventuellement surgelé, aux fins du paragraphe a).

3. Procédé selon la revendication 1 ou 2, **caractérisé en ce que** la garniture est de type salé et comporte une matière à base de viande, de poisson ou de fromage sous forme solide, crémeuse, pâteuse ou friable, et en particulier du groupe comprenant des saucisses, du pâté à base de viande, du fromage à pâte dure, du fromage à pâte molle, du fromage de brebis, du fromage frais, des produits à base de poisson, des crevettes, des beurres, des pâtés, des pâtes à tartiner.

4. Procédé selon la revendication 1 ou 2, **caractérisé en ce que** la garniture est de type végétarien et contient des légumes en morceaux.

5. Procédé selon la revendication 1 ou 2, **caractérisé en ce que** la garniture est de type sucré et est choisi de préférence dans le groupe comprenant des morceaux de chocolat, une garniture de crème sucrée, une garniture de nougat, une garniture de crème au chocolat, une garniture aux noix, une garniture aux graines de pavot.

6. Procédé selon l'une des revendications 1 à 5, **caractérisé en ce que** le canal ouvert (6) est conçue de manière étroite, ou la garniture est liée solidement à l'enveloppe de pâte (8, 8') par complémentarité de formes et/ou par liaison de matière, de sorte que la garniture ne peut pas tomber de l'enveloppe de pâte même avec lorsque le produit de collation tourne sur son axe longitudinal.

7. Procédé selon l'une des revendications 1 à 6, **caractérisé en ce que** l'enveloppe de pâte est produite à partir d'une pâte à base de levure.

8. Procédé selon l'une des revendications 1 à 7, **caractérisé en ce qu'**un produit de collation est produit avec une longueur de 15 à 25 cm, une largeur de 5 à 10 cm et une hauteur de 2 à 5 cm.

9. Procédé selon l'une des revendications 1 à 8, **caractérisé en ce que**, une fois le processus de cuisson terminé, le produit de collation est pourvu d'une garniture ou d'un nappage (9) dans la région de son canal longitudinal (6) .
